# FASCICULE DE BREVET EUROPEEN

(11) **EP 4 350 390 B1**
(45) Date de publication et mention de la délivrance du brevet: **03.12.2025**
(21) Numéro de dépôt: 23201416.7
(22) Date de dépôt: 03.10.2023
(51) Int. Cl.: G01S 13/75, G01S 7/03, G06K 19/07, G06Q 10/087, G06K 7/10

(54) **DISPOSITIF DE LOCALISATION D'OBJETS RANGÉS PAR DÉTECTION RFID**
VORRICHTUNG ZUR ORTUNG VON OBJEKTEN, DIE DURCH RFID-ERKENNUNG AUFGENOMMEN WURDEN
DEVICE FOR LOCATING OBJECTS ARRANGED BY RFID DETECTION

(30) Priorité: 04.10.2022 FR 2210135
(43) Date de publication de la demande: 10.04.2024
(73) Titulaire: Commissariat à l'Energie Atomique et aux Energies Alternatives, 75015 Paris (FR)
(72) Inventeur: DESCHARLES, Mélanie, 38054 GRENOBLE CEDEX 09 (FR); THOMAS, Thierry, 38054 GRENOBLE CEDEX 09 (FR); FRASSATI, François, 38054 GRENOBLE CEDEX 09 (FR)
(74) Mandataire: Atout PI Laplace

(56) Documents cités:
- EP-A1- 1 901 213
- WO-A1-99/05658

## Description

### Champ d'application

La présente invention concerne le domaine de localisation d'objets disposant d'étiquettes RFID, rangés dans un casier, via une séquence d'activation/désactivation de la détection des étiquettes RFID par un lecteur dédié.

### Problème soulevé

Ainsi, la technique de communication radiofréquences dite RFID est utilisable pour la détection de la présence d'objets physiques d'une manière générale. Cette technique est compatible avec des applications de stockage, de logistique et de présentation d'objets.

Chaque objet stocké est muni d'une étiquette RFID afin de récupérer des données à distance (« *RFID tag* » en anglais). Les étiquettes RFID des objets stockés contiennent un identifiant de l'objet et potentiellement et d'autres informations utiles sur l'objet tel que sa nature, son nom commercial, son type.

Des normes ont été publiées concernant ces dispositifs, on peut citer par exemple la norme ISO14443 pour les "cartes sans contact" et la norme ISO18000-3 pour les « radio-étiquettes » fonctionnant à la fréquence de 13.56MHz.

Dans ces dispositifs, il est établi un lien par champ magnétique radiofréquence entre le lecteur et une ou plusieurs étiquettes. Les organes de couplage sont des circuits conducteurs sous la forme de boucles, d'enroulements ou de bobines que l'on nomme "circuits d'antenne ou bobinage antenne".

Ainsi, la lecture des étiquettes RFID des objets rangés dans le casier est réalisable par un lecteur RFID comprenant une antenne permettant de lire toutes les « radio-étiquettes » actives des objets présents. L'antenne est réalisée par des enroulements conducteurs constituant un circuit inductif. La lecture est réalisée par couplage magnétique entre l'antenne et les étiquettes RFID à une fréquence de résonance prédéterminée permettant l'échange d'informations. Ainsi, il est possible d'avoir une liste des objets présents dans le casier. Ceci est particulièrement utile dans les activités d'inventaire d'objets stockés à titre d'exemple.

Le casier comprend une pluralité d'espaces de rangements délimités physiquement (cloisons, parois) ou virtuellement (par un repérage signalétique). L'inconvénient des solutions connues de ce type de dispositif de rangement d'objets est que l'exploration par communication RFID se limite à la détection et le référencement des objets présents sans pouvoir localiser l'emplacement de chaque objet dans le casier.

Il existe donc un besoin de développer une solution de localisation des objets stockés dans un casier comprenant une pluralité d'espaces de rangement.

### Art antérieur/ Restrictions de l'état de l'art

La demande de brevet WO200845075 décrit un plateau de jeux muni d'une matrice d'antennes formant plusieurs voies de lecture pour un lien radiofréquence de type RFID. Des objets munis d'une étiquette RFID sont disposés au-dessus de ce plateau. Cette solution n'est applicable que pour des hautes fréquences, elle nécessite que les dimensions de l'antenne ne soient pas trop faibles par rapport à la longueur d'onde de résonance. De plus, cette solution n'est pas compatible avec un lien radiofréquence RFID de type inductif. L'inconvénient majeur consiste à l'utilisation nécessaire d'une pluralité d'antenne de lecture pour réaliser la localisation. Cette approche porte la complexité sur la structure de l'antenne du lecteur, sous la forme d'un réseau d'antennes commutées. Cela induit une complexité d'implémentation matérielle et une haute consommation énergétique.

Le document EP 1901213 A1 décrit une méthode d'inventaire d'un stock d'articles. Les articles sont équipés d'une étiquette ou d'un transpondeur RFID, activé ou désactivé mécaniquement ou physiquement (par exemple, par un bouton, un écran, etc.). Lorsqu'un article est pris par un client, l'étiquette RFID est activée et détectée par le lecteur RFID, qui transmet cette information à un serveur. Si le niveau de stock atteint un niveau prédéterminé, une alarme est générée pour le réapprovisionnement ou le déchargement.

Enfin, la demande de brevet WO 99/05659 A1 divulgue un système de sécurité électronique qui utilise une série d'étiquettes RFID préétablies. Chaque étiquette est associée et fixée à un article ou à l'emballage d'un article et inclut une information d'étiquette unique saisie dans une base de données informatique sous la forme d'un enregistrement. Lorsqu'une étiquette est détectée dans une zone de détection par un interrogateur, les enregistrements dans la base de données sont comparés avec l'information d'étiquette au moyen d'un comparateur et une réponse appropriée est produite par la base de données. Lorsqu'un accès autorisé à l'article étiqueté est obtenu, l'étiquette peut être désactivée par un procédé électronique, physique ou virtuel.

### Exposé de l'invention

L'invention a pour objet un dispositif de localisation d'objets rangés dans un casier comprenant une pluralité d'espaces de rangement ; chaque objet étant équipé d'une étiquette RFID ; ledit dispositif de localisation d'objets comprenant :
- une pluralité de circuits inhibiteurs destinés à être placés chacun dans un espace de rangement associé et configurés pour, lorsque l'un desdits objets est rangé dans l'espace de rangement associé et lorsque ledit circuit inhibiteur est activé, inhiber la lecture de l'étiquette RFID dudit objet par un lecteur RFID ,
- une unité de commande configurée pour commander l'activation des circuits inhibiteurs selon une séquence d'activation prédéterminée ;
- une unité de localisation configurée pour contrôler le lecteur RFID ; et pour recevoir, à chaque étape de la séquence d'activation, une liste d'identifiants des objets rangés dans le casier fournie par le lecteur RFID , et configurée pour identifier l'espace de rangement de chaque objet à partir des listes d'identifiant et de la séquence d'activation.

Selon un aspect particulier de l'invention, le circuit inhibiteur est apte à transposer la fréquence de résonance de l'étiquette RFID vers une seconde fréquence de résonance par couplage magnétique lorsqu'il est activé.

Selon un aspect particulier de l'invention, la séquence d'activation comprend :
- une étape d'initialisation dans laquelle tous les inhibiteurs sont désactivés de manière à lister tous les objets rangés dans le casier ;
- une succession d'étapes dans lesquels une partie seulement des inhibiteurs sont activés selon la séquence d'activation.

Selon un aspect particulier de l'invention, le dispositif de localisation selon l'invention comprend en outre ledit casier ; tel que les espaces de rangement sont dimensionnés de manière à ce que le coefficient de couplage magnétique entre d'une part un circuit inhibiteur et d'autre part l'étiquette RFID de l'objet placé dans l'espace de rangement associé au dit circuit inhibiteur, soit compris entre 0.5 et 1.

Selon un aspect particulier de l'invention, la seconde fréquence de résonance est comprise entre à 5MHz et 10MHz.

Selon un aspect particulier de l'invention, chaque inhibiteur comprend :
- un circuit de type LC comprenant au moins un élément inductif monté en série avec au moins un élément capacitif,
- un commutateur commandé en tension pour commander la fermeture dudit le circuit de type LC.

Selon un aspect particulier de l'invention, le commutateur commandé en tension comprend une diode de type PIN ayant une première électrode connectée à une première tension de commande et une seconde électrode, l'état de conductivité de la diode de type PIN étant contrôlée par un circuit de polarisation.

Selon un aspect particulier de l'invention, le circuit de polarisation comprend un circuit bouchon entre la première électrode de la diode et première tension de commande ; le circuit bouchon ayant une impédance élevée à la fréquence de résonance de l'étiquette RFID correspondant à la configuration d'un circuit inhibiteur désactivé.

Selon un aspect particulier de l'invention, le commutateur commandé en tension est réalisé par un transistor de type CMOS.

Selon un aspect particulier de l'invention, les inhibiteurs sont réalisés sur un substrat, pour chaque circuit inhibiteur, l'élément inductif est réalisé par au moins une première bobine plane comprenant une pluralité de pistes métalliques en spirale déposées sur au moins une face dudit circuit imprimé.

Selon un aspect particulier de l'invention, l'élément inductif comprend en outre une seconde bobine plane circulaire et dans lequel la première bobine est de forme circulaire ayant un diamètre égal à celui de la seconde bobine plane.

### Brève Description des Dessins

D'autres caractéristiques et avantages de la présente invention apparaîtront mieux à la lecture de la description qui suit en relation aux dessins annexés suivants :
[Fig. 1a] la figure 1a illustre une vue de dessus d'un schéma du dispositif de localisation selon l'invention.
[Fig. 1b] la figure 1b illustre une vue de face d'une partie du dispositif de localisation selon l'invention.
[Fig. 2] la figure 2 illustre un organigramme des étapes de la séquence de contrôle du fonctionnement du dispositif de localisation selon l'invention.
[Fig. 3] la figure 3 illustre un circuit inhibiteur selon un premier mode de réalisation de l'invention.
[Fig. 4a] la figure 4a illustre un exemple de la courbe de gain en réponse de champ magnétique de l'ensemble formé par l'étiquette RFID d'un objet et le circuit inhibiteur lorsque le circuit inhibiteur associé est activé et la courbe de gain de l'étiquette RFID d'un objet lorsque le circuit inhibiteur associé est désactivé.
[Fig. 4b] la figure 4b illustre un exemple de la courbe de gain en tension aux bornes du circuit d'antenne de l'étiquette RFID d'un objet lorsque le circuit inhibiteur associé est activé et la courbe de gain de l'étiquette RFID d'un objet lorsque le circuit inhibiteur associé est désactivé.
[Fig. 5a] la figure 5a illustre le circuit inhibiteur selon un second mode de réalisation de l'invention.
[Fig. 5b] la figure 5b illustre le circuit inhibiteur selon un troisième mode de réalisation de l'invention.
[Fig. 6a] la figure 6a illustre une vue de dessus d'un exemple d'implémentation du circuit inhibiteur selon de l'invention.
[Fig. 6b] la figure 6b illustre une vue en coupe d'un exemple d'implémentation du circuit inhibiteur selon de l'invention.

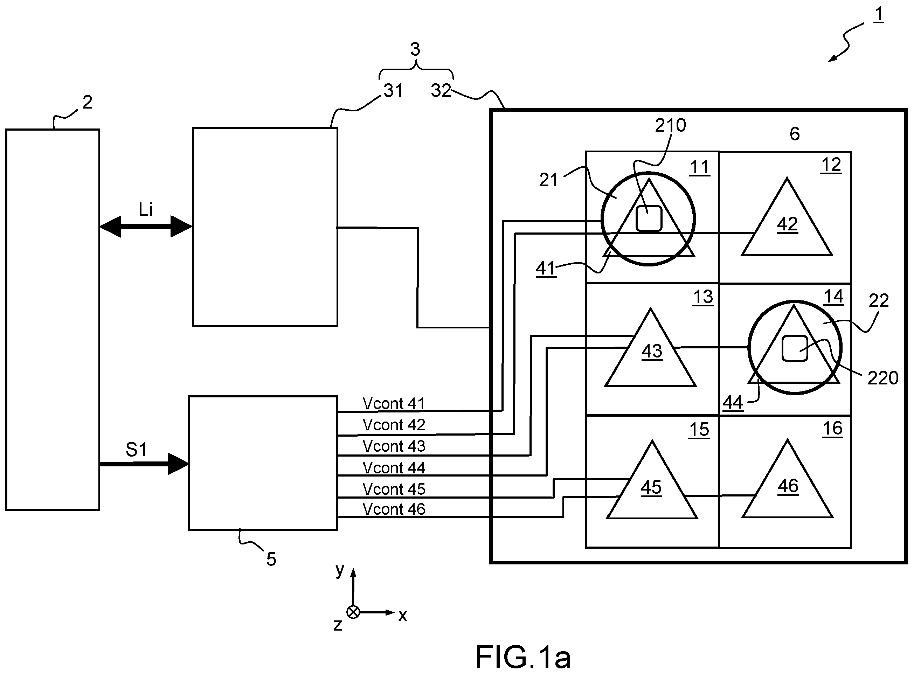

La figure 1a illustre une vue de dessus d'un schéma du dispositif de localisation 1 selon l'invention. Le dispositif de localisation 1 d'objets comprend un casier 6 comprenant une pluralité d'espaces de rangement pour accueillir des objets rangés ; un lecteur RFID 3 ; une pluralité de circuits inhibiteurs 41, 42, 43, 44 destinés à être placés chacun dans un espace de rangement associé ; une unité de commande 5 et une unité de localisation 2.

Afin d'illustrer l'invention à titre indicatif et non limitatif, nous allons décrire un casier 6 comprenant six espaces de rangement 11 à 16 et dans lequel deux objets sont stockés : l'objet 21 rangé dans l'espace de rangement 11 et l'objet 22 rangé dans l'espace de rangement 14. Les espaces de rangement sont délimités par des obstacles physiques (de type paroi ou cloisons) ou par une signélatique pour délimiter les espaces de rangement. L'objet 21 est équipé d'une étiquette RFID 210. L'étiquette RFID 210 stocke des informations permettant d'identifier l'objet 41 tel qu'un identifiant noté A. L'objet 22 est équipé d'une étiquette RFID 220. L'étiquette RFID 220 stocke des informations permettant d'identifier l'objet 22 tel qu'un identifiant noté B.

Le lecteur RFID 3 comprend une antenne 32 couvrant toute la surface du casier 6 en combinaison avec un circuit de traitement 31. L'antenne est apte à détecter les objets présents dans le casier par couplage magnétique avec les étiquettes RFID associées. L'unité de traitement 31 est configurée pour générer une liste Lᵢ des identifiants associées aux objets détectés par l'antenne 32.

Un circuit inhibiteur 41 à 46 est placé au fond de chaque espace de rangement 11 à 16 du casier 6. Chaque circuit inhibiteur est configuré pour, inhiber la lecture de l'étiquette RFID de l'objet rangé dans son emplacement de rangement associé par le lecteur RFID 3. Lorsque le circuit inhibiteur est désactivé, la détection de l'objet rangé dans l'espace de rangement associé audit circuit inhibiteur est réalisable via le lecteur RFID par couplage magnétique à une première fréquence de résonance appelée « fréquence de travail ». D'une manière générale, la fréquence de travail est prédéterminée par construction du système RFID, lecteur RFID 3 associé aux étiquettes RFID (210 et 220). L'antenne RFID 32 est raccordée à l'unité de traitement 31 qui génère le signal HF appliqué à l'antenne 32 et détermine la fréquence de travail. Dans le cas illustré, lorsque le circuit inhibiteur 41 est activé la détection de l'objet 21 par l'antenne RFID 32 est inhibée. Lorsque le circuit inhibiteur 41 est désactivé la détection de l'objet 21 par l'antenne RFID 32 est réalisable à la fréquence de travail prédéterminée. De même, lorsque le circuit inhibiteur 44 est activé, la détection de l'objet 22 par le lecteur 3 via son antenne RFID 32 est inhibée. Lorsque le circuit inhibiteur 44 est désactivé la détection de l'objet 22 le lecteur 3 via son antenne RFID 32est réalisable à la fréquence de travail prédéterminée.

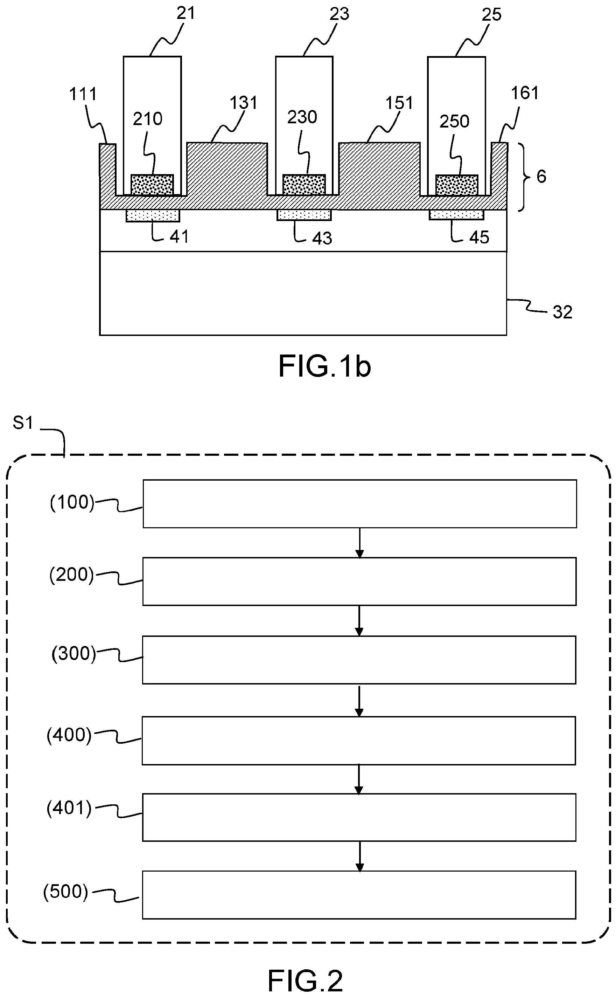

Afin d'obtenir l'effet d'inhibition de la lecture RFID, chaque circuit inhibiteur doit être placé dans l'espace de rangement de manière à être à proximité de l'étiquette RFID de l'objet lorsque ce dernier est rangé dans ledit espace de rangement. On entend par l'expression « à proximité» une position dans une sphère de rayon inférieur à 10 mm à partir de l'inhibiteur. La proximité entre le circuit inhibiteur et l'étiquette de l'objet rangé permet de maximiser le couplage magnétique entre ces deux composants. L'action du circuit inhibiteur sur la lecture d'une étiquette est effectif lorsque le coefficient de couplage magnétique entre les deux circuits d'antenne, celui de l'inhibiteur et celui de l'étiquette RFID, est situé entre 0,5 et 1. Avantageusement, l'objet rangé est placé de manière à aligner son étiquette RFID avec l'Inhibiteur associé, et de manière à minimiser la distance qui les sépare, afin de maximiser le coefficient de couplage magnétique. La figure 1b illustre un exemple avec optimisation du coefficient de couplage magnétique entre chaque étiquette RFID et le circuit inhibiteur associé. En effet, les espaces de rangements 11, 13 et 15 du casier 6 sont délimités par les parois physiques 111, 131, 151 et 161. La délimitation par des parois physiques assure l'alignement entre l'étiquette RFID de chaque objet placé avec le circuit inhibiteur logé au fond de l'espace de rangement dédié audit objet. La distance séparant un circuit inhibiteur de l'étiquette de l'objet stocké varie entre 0,5mm et 5mm selon l'axe vertical (y). Cela permet de maximiser le coefficient de couplage magnétique entre le circuit inhibiteur et l'étiquette RFID d'un objet rangé et donc améliorer la performance d'inhibition de chaque circuit inhibiteur.

L'unité de commande 5 est configurée pour commander l'activation des circuits inhibiteurs 41, 42, 43 et 44 selon une séquence d'activation prédéterminée. Un exemple de séquence d'activation possible sera détaillé dans une section ultérieure. Chaque circuit inhibiteur est commandé par un signal de commande propre à lui. Cela permet de réaliser plusieurs combinaisons de configurations d'inhibition en activant au moins une partie des circuits inhibiteurs pendant chaque étape de la séquence d'activation. A titre d'exemple, le circuit inhibiteur 41 associé à l'espace de rangement 11 est commandé par le signal de commande Vcont41 provenant de l'unité de commande 5. A titre d'exemple, il est possible de réaliser l'unité de commande 5 par un microcontrôleur programmable. Les signaux de contrôle sont propagés via des connexions électriques filaires.

L'unité de localisation 2 est configurée pour recevoir, à chaque étape de la séquence d'activation, une liste d'identifiants des objets rangés dans le casier fournie par le lecteur RFID 3. De plus, l'unité de localisation est configurée pour identifier l'espace de rangement de chaque objet à partir des listes d'identifiant et de la séquence d'activation. Il s'agit d'un traitement de données qui peut être réalisé par un algorithme de calcul implémenté dans un calculateur ou un ordinateur. L'unité de localisation 2 contrôle en outre l'unité de commande 5 en fonction des résultats de lecture fournis par le circuit de traitement 31.En effet, l'unité de localisation 2, envoie les ordres de lecture à l'unité de traitement 31 et recueille les résultats de lecture (par exemple la liste des identifiants des étiquettes RFID lues).

Lors de la lecture, deux étiquettes peuvent transmettre leurs identifiants dans un même créneau de temps de détection rendant ainsi le message incompréhensible par le lecteur, on dit alors qu'il y a collision. L'unité de localisation 2 selon l'invention, peut exploiter les informations de collisions pour localiser l'emplacement des objets rangés dans le casier 6. L'information de collision est alors exploitable dans le contexte de l'invention. Le lecteur 3 est configuré selon un mode qui ne traite pas les collisions. Cela permet de réduire le temps d'exécution de l'opération de localisation par le dispositif de localisation d'objets selon l'invention. La figure 2 illustre un organigramme des étapes d'un exemple d'une séquence d'activation du réseau de circuits inhibiteurs selon l'invention. Il s'agit d'un exemple non limitatif pour illustrer l'invention. L'Homme du métier peut adapter la séquence selon les contraintes de temps de précision de la mise en application de l'invention. On appliquera la séquence d'activation sur l'exemple illustré dans la figure 1a.

La première étape (100) de la séquence d'activation S1 consiste en une étape d'initialisation dans laquelle l'unité de localisation 2 envoie un premier ordre de commande d'inhibition à l'unité de commande 5 pour désactiver tous les circuits inhibiteurs 41 à 46. Ensuite, l'unité de localisation 2 envoie un ordre de lecture d'inventaire au lecteur RFID 3. Le circuit de traitement 31 du lecteur RFID 3 génère une première liste L₀ comprenant les identifiants de tous les objets présents dans le casier à savoir l'objet 21 et l'objet 22. On note L₀ ={21,22} avec tous les circuits d'inhibition désactivés.

La deuxième étape (200) consiste à activer uniquement le circuit inhibiteur 41 associé à l'espace de rangement 11. Suite à une lecture par l'antenne 32, le circuit de traitement 31 du lecteur RFID 3 génère une deuxième liste L₁ comprenant uniquement l'identifiant de l'objet 22. On note L₁ ={22} avec le circuit inhibiteur 41 activé. Cela signifie que l'objet 21 qui n'apparaît pas dans la liste L₁ est rangé dans l'espace de rangement 11 associé au circuit inhibiteur activé 41.

La troisième étape (300) consiste à activer uniquement le circuit inhibiteur 42 associé à l'espace de rangement 12. Suite à une lecture par l'antenne 32, le circuit de traitement 31 du lecteur RFID 3 génère une troisième liste L₂ identique à la première liste L₀. Cela permet de déduire qu'aucun objet n'est rangé dans l'espace de rangement 12 associé au circuit inhibiteur activé 42.

La quatrième étape (400) consiste à activer uniquement le circuit inhibiteur 43 associé à l'espace de rangement 13. De la même manière que l'étape (200), on obtient une liste L₃ identique à la première liste L₀. Cela permet de déduire qu'aucun objet n'est rangé dans l'espace de rangement 13 associé au circuit inhibiteur activé 43.

La cinquième étape (500) consiste à activer uniquement le circuit inhibiteur 44 associé à l'espace de rangement 14. Suite à une lecture par l'antenne 32, le circuit de traitement 31 du lecteur RFID 3 génère une cinquième liste L₄ comprenant uniquement l'identifiant de l'objet 21. Cela signifie que l'objet 22 qui n'apparaît pas dans la liste L₄ est rangé dans l'espace de rangement 14 associé au circuit inhibiteur activé 44.

L'ensemble des objets détecté dans l'étape d'initialisation ont été localisés dans le casier. Il n'est pas nécessaire de continuer à parcourir les autres configurations d'inhibition. Le calcul de l'emplacement (par élimination ici) à partir des listes générées Lᵢ et de la configuration d'inhibition de chaque étape de la séquence S1, est réalisé par l'unité de localisation 2. L'unité de localisation 2 est réalisée par un calculateur programmable. Les listes Lᵢ sont fournies par le lecteur RFID 3 à l'unité de localisation 2, suite à une commande d'inventaire exhaustif.

L'exemple illustré permet de localiser d'une manière précise l'emplacement de chaque objet stocké en activant (ou en désactivant) les inhibiteurs 41 à 46 un par un. Cependant, il est envisageable d'activer un groupe de circuits inhibiteurs de manière à couvrir une région prédéfinie du casier pour chaque étape. A titre d'exemple, il est envisageable d'activer tous les circuits inhibiteurs appartenant à la même ligne (ou colonne) du casier 6 (dans le cas d'une matrice d'espaces de rangement). Cela permet d'avoir une localisation rapide des objets rangés dans le casier 6. En effet, pour un identifiant présent dans la liste d'inventaire d'une ligne de circuits inhibiteurs inactifs et celle d'une colonne, on peut en déduire qu'il est présent dans la case d'intersection de ladite ligne et ladite colonne.

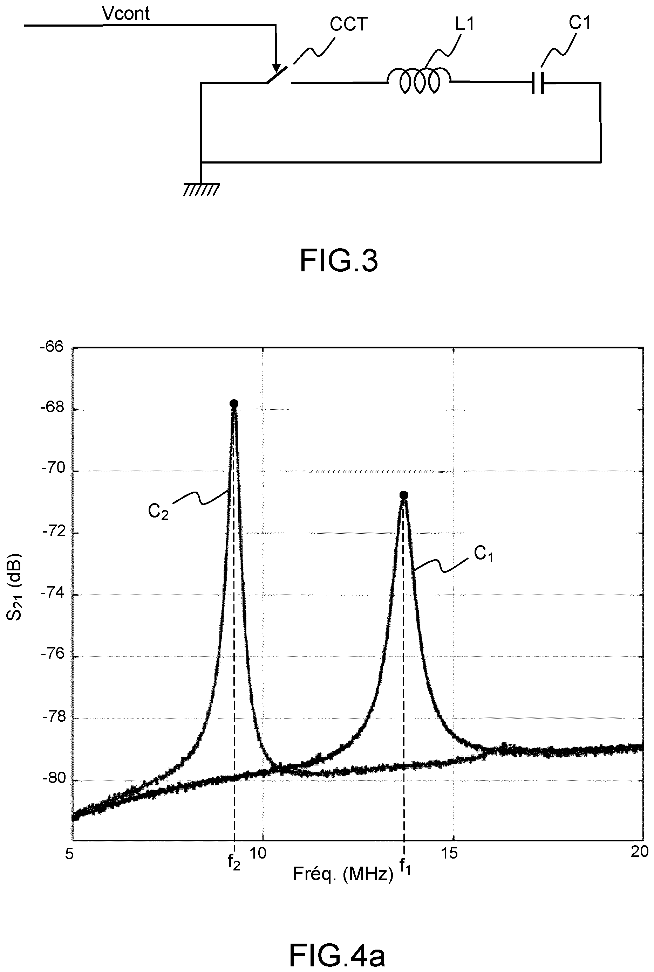

La figure 3 illustre un circuit inhibiteur selon un premier mode de réalisation de l'invention. Chaque circuit inhibiteur comprend un circuit de type LC comprenant au moins un élément inductif L1 monté en série avec au moins un élément capacitif C1 et un commutateur CCT commandé en tension pour commander la fermeture dudit circuit de type LC. Lorsque le commutateur CCT est à l'état bloquant (haute impédance), le circuit LC série est en - circuit ouvert. Lorsque le commutateur CCT est à l'état passant, le circuit LC est un circuit fermé. Le commutateur CCT est commandé par le signal Vcont provenant de l'unité de commande 5. Le contrôle avec une tension électrique offre une meilleure performance, une consommation énergétique réduite, un encombrement réduit et une meilleure robustesse technologique par rapport à un interrupteur mécanique. Le dimensionnement de l'élément capacitif C1 et de l'élément inductif L1, est choisi de manière à transposer la fréquence de résonance f₁ de l'étiquette RFID de l'objet rangé dans l'espace de rangement associé, vers une seconde fréquence de résonance f₂ par couplage magnétique lorsque le circuit LC est fermé. La tension à la fréquence de travail (par exemple 13.56MHz) aux bornes du circuit d'antenne de l'étiquette soumise au champ électromagnétique du lecteur RFID peut ainsi passer de quelques volts permettant le fonctionnement de la puce RFID de l'étiquette, à une tension résiduelle de quelques centaines de mV insuffisante pour que la puce RFID puisse fonctionner.

A titre d'exemple, l'inductance de l'élément inductif est égale à 2.2µH et la capacité de l'élément capacitif C1 est égale à 120pF. Cela permet de décaler la fréquence de résonance en tension du circuit d'antenne de l'étiquette d'une valeur initiale f₁= 13,6MHz à une seconde fréquence de résonance f₂=7,9MHz lorsque le circuit inhibiteur est activé (commutateur CCT passant). L'exemple de dimensionnement précédent présente un facteur de qualité de 40. D'une manière générale, dans le cadre de l'invention, la seconde fréquence de résonance f₂ est comprise entre 5MHz et 10MHz.

D'une manière générale, lorsque le circuit inhibiteur est activé, le gain en tension aux bornes de l'étiquette RFID associée est divisé par 10 à la fréquence de travail initiale par rapport à la configuration sans inhibition.

la figure 4a illustre un exemple de la courbe de gain C1 en réponse de champ magnétique de l'ensemble formé par l'étiquette RFID d'un objet et le circuit inhibiteur lorsque le circuit inhibiteur associé est désactivé et la courbe de gain C2 en réponse en champ magnétique de l'ensemble formé par l'étiquette RFID d'un objet et le circuit inhibiteur lorsque le circuit inhibiteur associé est activé. L'étiquette RFID 210 (ou 220) de l'objet 21 (ou 22) est détectable par le lecteur RFID 3 à une fréquence de travail autour de la première fréquence de résonance f₁. L'énergie échangée entre l'antenne 32 et l'étiquette RFID 210 lors d'une lecture est maximale à cette fréquence comme illustré par le pic de la courbe C1. L'activation du circuit LC du circuit inhibiteur décale la courbe du gain pour obtenir la courbe C2 correspondant à l'ensemble formé par inhibiteur et l'étiquette RFID vu par l'antenne 32. L'activation du circuit LC vient ainsi transposer la fréquence de résonance à une valeur f₂ différente de la fréquence de travail f₁ de l'antenne RFID 32. Ainsi, la détection de l'objet 21 (ou 22) par le lecteur RFID 3 est inhibée par décalage fréquentiel entre l'antenne 32 (conçue pour une détection à f₁) et la cible à lire ayant une fréquence décalée par couplage magnétique avec le circuit inhibiteur activé.

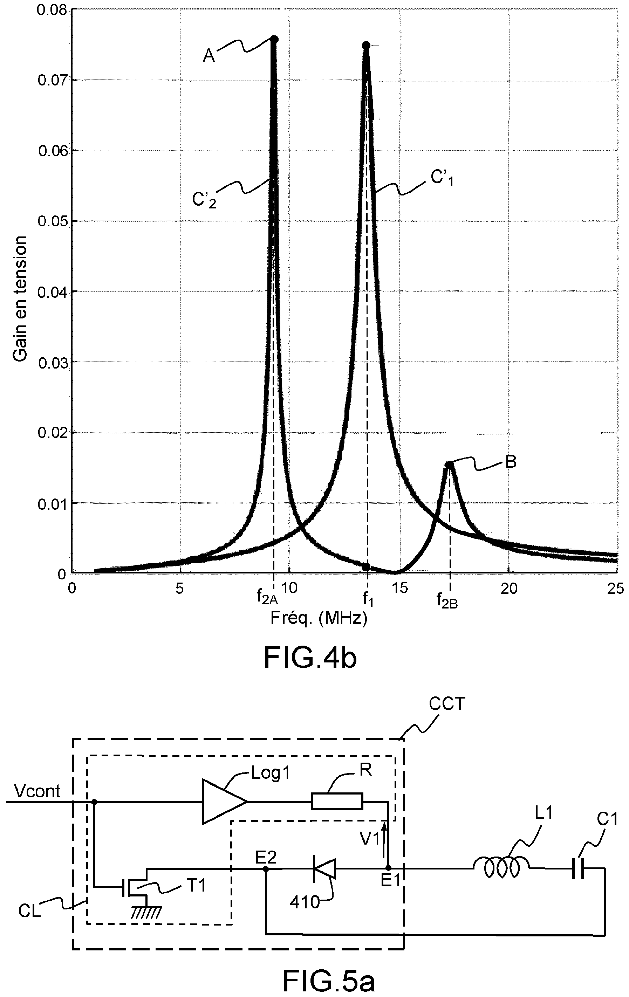

La figure 4b illustre un exemple de la courbe de gain C'1 en tension aux bornes du circuit d'antenne de l'étiquette RFID d'un objet lorsque le circuit inhibiteur associé est désactivé et la courbe de gain C'2 en tension aux bornes du circuit d'antenne de l'étiquette RFID d'un objet lorsque le circuit inhibiteur associé est activé. L'étiquette RFID 210 (ou 220) de l'objet 21 (ou 22) est détectable par le lecteur RFID 3 à une fréquence de travail autour de la première fréquence de résonance f₁. L'énergie échangée entre l'antenne 32 et l'étiquette RFID 210 lors d'une lecture est maximale à cette fréquence comme illustré par le pic de la courbe C'1. L'activation du circuit LC du circuit inhibiteur décale la courbe du gain pour obtenir la courbe C'2 correspondant à la tension aux bornes du circuit d'antenne de l'étiquette RFID que peut induire l'antenne 32. Dans le cas illustré, la courbe de gain C'2 présente un premier pic de résonance A correspondant à la fréquence f_{2A} et un second pic B à une fréquence f_{2B} supérieure à la fréquence de résonance f_{2A}. L'activation du circuit LC provoque ainsi, une courbe de gain en tension avec une première fréquence de résonance f_{2A} inférieure à la fréquence de travail f₁ et une seconde fréquence de résonance f_{2B} supérieure inférieure à la fréquence de travail f₁. Le gain de tension aux alentours de la fréquence f₁ est divisé par 10 par rapport à la configuration sans inhibition (courbe C'1). Ainsi, la détection de l'objet 21 (ou 22) par le lecteur RFID 3 est inhibée par décalage fréquentiel entre l'antenne 32 (conçue pour une détection à f₁) et la cible à lire ayant une fréquence décalée par couplage magnétique avec le circuit inhibiteur activé.

La figure 5a illustre un circuit inhibiteur selon un second mode de réalisation de l'invention ; et plus particulièrement un exemple d'implémentation du commutateur CCT commandé en tension. Le commutateur CCT comprend une diode de type PIN (de l'anglais Positive Intrinsic Negative diode) 410 ayant une première électrode E1 et une seconde électrode E2. La seconde électrode E2 est connectée à la masse à travers un transistor de commande T1. La première électrode E1 est connectée à l'élément inductif L1 du circuit LC. La seconde électrode E2 est connectée à l'élément capacitif C1 du circuit LC. Le potentiel électrique sur la première électrode E1 et sur la seconde électrode E2 sont contrôlés par un circuit de polarisation CL. Lorsque la diode PIN est polarisée dans le sens direct, son impédance est faible et elle est dans un état passant. Lorsque la diode PIN est polarisée dans le sens indirect, son impédance est forte et elle est dans un état bloquant. Le circuit de polarisation CL comprend une porte logique log1 qui reçoit le signal de commande Vcont provenant de l'unité de commande 5. La porte logique adapte le signal d'entrée Vcont (signal numérique) pour être compatible avec la polarisation de la diode PIN. Le circuit de polarisation CL comprend en outre une résistance R montée en série entre la sortie de la porte logique log1 et le nœud E1 afin de contrôler le courant parcourant la diode PIN à son état passant. L'intensité du courant parcourant la diode PIN est comprise entre 1mA et 10mA. Lorsque le signal Vcont est à un état logique haut, le nœud E1 est à un potentiel électrique haut reçu à travers la porte logique log1 et la résistance R, et le transistor T1 est passant de manière à ramener le potentiel électrique du nœud E2 à la masse. Cela induit une polarisation directe de la diode PIN 410. Cela induit la fermeture du circuit LC et donc l'activation du circuit inhibiteur.

L'avantage de l'utilisation de la diode de type PIN est que l'effet basse impédance à l'état passant est accentué pour les signaux électriques radiofréquences RF. De plus, en adaptant les courants et les tensions aux points de polarisation de la diode, on améliore la fiabilité et la robustesse technique du commutateur CCT par rapport aux autres solutions de commutations. (commutations mécaniques par exemple).

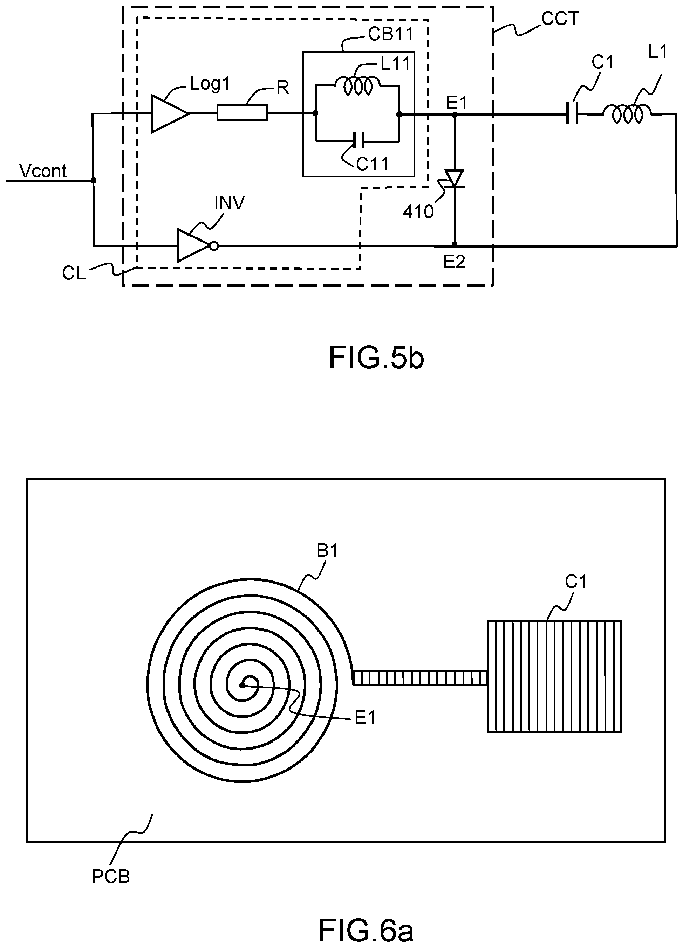

La figure 5b illustre un circuit inhibiteur selon un troisième mode de réalisation de l'invention ; et plus particulièrement un exemple d'implémentation alternatif du commutateur CCT commandé en tension. Le circuit de polarisation CL comprend un inverseur INV à la place du transistor T1. L'inverseur est apte à inverser l'état logique du signal de commande Vcont vers l'électrode E2. Le circuit de polarisation CL comprend en outre un circuit bouchon CB₁₁ monté entre la première électrode E1 et la résistance R. le circuit bouchon CB₁₁ comprend un élément capacitif C₁₁ monté en parallèle avec une inductance L₁₁. Le circuit bouchon CB₁₁ est dimensionné pour présenter une impédance élevée à la fréquence de travail f₁. Cela permet d'isoler le circuit de polarisation CL du circuit L₁C₁ du circuit inhibiteur. Plus particulièrement, le circuit bouchon permet de séparer les signaux électriques continus (DC) de polarisation de la diode PIN, des signaux à hautes fréquences (HF et plus particulièrement 13.56MHz) du circuit résonant L1, C1.

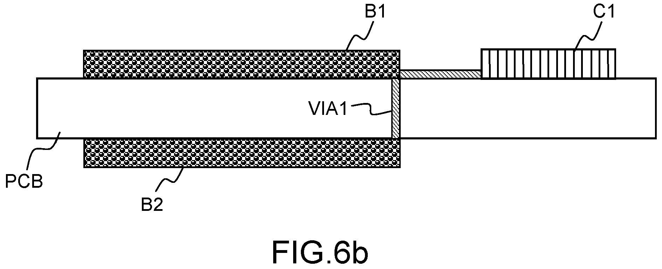

La figure 6a illustre une vue de dessus d'un exemple d'implémentation du circuit inhibiteur selon l'invention. La figure 6b illustre une vue en coupe d'un exemple d'implémentation du circuit inhibiteur selon l'invention. L'exemple d'implémentation illustré est réalisé sur un circuit imprimé de type PCB. Le circuit imprimé de type PCB est dénommé « platine de sélection » et peut être monté en dessous du casier 6.

L'élément inductif L1 est réalisé par deux bobines planes B1 et B2. Chaque bobine comprend une pluralité de pistes métalliques en spirale. La première bobine B1 est déposée sur une première face du circuit imprimé PCB. La seconde bobine B2 est déposée sur la face opposée du circuit imprimé PCB. Les deux bobines B1 et B2 peuvent être identiques. A titre d'exemple, chaque bobine comprend six spires circulaires pour un diamètre global de 14mm. Les spires sont des pistes métalliques de largeur de 0,2mm espacées au pas de 0,4mm. Les deux bobines B1 et B2 sont montées en série à travers l'élément capacitif C1. L'élément capacitif C1 est implémenté sur une face du substrat PCB.

La première extrémité de la première bobine B1 est connectée à la première électrode E1 de la diode PIN non représentée ici (ou à la première électrode du commutateur d'une manière générale). La deuxième extrémité de la première bobine B1 est connectée à une borne de l'élément capacitif C1.

La première extrémité de la seconde bobine B2 est connectée à la seconde électrode E2 de la diode PIN non représentée ici à travers un via non représenté ici (ou à la seconde électrode du commutateur d'une manière générale). La deuxième extrémité de la seconde bobine B2 est connectée à l'autre borne de l'élément capacitif C1 à travers un via VIA1.

Alternativement, l'élément capacitif C1 est placé dans une zone à l'intérieur du cercle défini par la bobine B1. La diode PIN 410 est placée dans une zone extérieure au cercle défini par la bobine B1. Les connexions électriques entre les bobines B1, B2 et l'élément capacitif C1 sont réalisées par des vias traversants le substrat PCB.

Cette implémentation présente une structure plane du circuit inhibiteur permettant une intégration simple dans le dispositif de localisation d'objets selon l'invention. La pluralité de circuits inhibiteurs est réalisable sur une seule « platine de sélection » qui est montée en dessous du plan du casier 6. Cette intégration compacte permet d'assurer un meilleur couplage magnétique entre les circuits inhibiteurs et les étiquettes RFID des objets placés dans les espaces de rangements associés. En effet, seule l'épaisseur du fond du casier, de l'ordre de quelques millimètres, sépare le circuit inhibiteur de l'étiquette RFID de l'objet rangé.

Alternativement, il est possible de réaliser chaque circuit inhibiteur sur un circuit imprimé dédié. Cela permet de reproduire la même conception du circuit inhibiteur plusieurs fois selon les besoins de fabrication.

## Revendications

1. Dispositif de localisation (1) d'objets (21, 22, 23) rangés dans un casier (6) comprenant une pluralité d'espaces de rangement (11, 12, 13, 14, 15, 16) ; chaque objet (21, 22, 23) étant équipé d'une étiquette RFID (210, 220) ; ledit dispositif de localisation d'objets (21, 22, 23) comprenant :
- une pluralité de circuits inhibiteurs (41, 42, 43, 44) destinés à être placés chacun dans un espace de rangement associé et configurés pour, lorsque l'un desdits objets est rangé dans l'espace de rangement associé et lorsque ledit circuit inhibiteur (41, 42, 43, 44) est activé, inhiber la lecture de l'étiquette RFID (210,220, 230) dudit objet par un lecteur RFID (3),
ledit dispositif de localisation (1) d'objets étant **caractérisé en ce qu'**il comprend en autre:
- une unité de commande (5) configurée pour commander l'activation des circuits inhibiteurs (41, 42, 43, 44) selon une séquence d'activation prédéterminée ;
- une unité de localisation (2) configurée pour contrôler le lecteur RFID (3) ; et pour recevoir, à chaque étape de la séquence d'activation, une liste d'identifiants des objets rangés dans le casier fournie par le lecteur RFID (3), et configurée pour identifier l'espace de rangement (11, 12, 13,14) de chaque objet à partir des listes d'identifiant et de la séquence d'activation.

2. Dispositif de localisation (1) d'objets (21, 22, 23) selon la revendication 1 dans lequel, le circuit inhibiteur est apte à transposer la fréquence de résonance de l'étiquette RFID vers une seconde fréquence de résonance par couplage magnétique lorsqu'il est (41, 42, 43, 44) activé.

3. Dispositif de localisation (1) selon la revendication 2 dans lequel la seconde fréquence de résonance (f₂) est comprise entre à 5MHz et 10MHz.

4. Dispositif de localisation (1) selon l'une quelconque des revendications 1 à 3 dans lequel la séquence d'activation comprend :
- une étape d'initialisation dans laquelle tous les inhibiteurs sont désactivés de manière à lister tous les objets rangés dans le casier ;
- une succession d'étapes dans lesquels une partie seulement des inhibiteurs sont activés selon la séquence d'activation.

5. Dispositif de localisation (1) selon l'une quelconque des revendications précédentes comprenant en outre ledit casier ; tel que les espaces de rangement (11, 12, 13,14) sont dimensionnés de manière à ce que le coefficient de couplage magnétique entre
d'une part un circuit inhibiteur (41, 42, 43, 44) et d'autre part l'étiquette RFID (210,220, 230) de l'objet placé dans l'espace de rangement (11, 12, 13,14) associé au dit circuit inhibiteur, soit compris entre 0.5 et 1.

6. Dispositif de localisation (1) selon l'une quelconque des revendications précédentes dans lequel chaque inhibiteur (41, 42, 43, 44) comprend :
- un circuit de type LC comprenant au moins un élément inductif (L1) monté en série avec au moins un élément capacitif (C1),
- un commutateur commandé en tension (CCT) pour commander la fermeture dudit le circuit de type LC ;

7. Dispositif de localisation (1) selon la revendication précédente dans lequel le commutateur commandé en tension (CCT) comprend une diode de type PIN (410) ayant une première électrode (E1) connectée à une première tension de commande (V1) et une seconde électrode (E2), l'état de conductivité de la diode de type PIN (410) étant contrôlée par un circuit de polarisation (CL).

8. Dispositif de localisation (1) selon la revendication précédente dans lequel le circuit de polarisation (CL) comprend :
- une porte logique (log1) configurée pour adapter un signal de commande numérique (Vcont) à la polarisation de la diode de type PIN (410);
- une résistance (R) montée en série avec la porte logique (log1) ;
- un circuit bouchon (CB₁₁) monté entre la première électrode (E1) de la diode (410) et la résistance (R); le circuit bouchon (CB₁₁) ayant une impédance élevée à la fréquence de résonance de l'étiquette RFID correspondant à la configuration d'un circuit inhibiteur désactivé.

9. Dispositif de localisation (1) selon la revendication 6 dans lequel le commutateur commandé en tension (CCT) est réalisé par un transistor de type CMOS.

10. Dispositif de localisation (1) selon l'une quelconque des revendications 6 à 8 dans lequel les inhibiteurs sont réalisés sur un circuit imprimé (PCB),
pour chaque circuit inhibiteur, l'élément inductif (L1) est réalisé par au moins une première bobine (B1) plane comprenant une pluralité de pistes métalliques en spirale déposées sur au moins une face dudit circuit imprimé.

11. Dispositif de localisation (1) selon la revendication précédente dans lequel l'élément inductif comprend en outre une seconde bobine (B2) plane circulaire et dans lequel la première bobine est de forme circulaire ayant un diamètre égal à celui de la seconde bobine plane.

## Patentansprüche

1. Vorrichtung zur Ortung (1) von Objekten (21, 22, 23), die in einem Kasten (6) verstaut sind, der eine Vielzahl von Stauräumen (11, 12, 13, 14, 15, 16) umfasst; wobei jedes Objekt (21, 22, 23) mit einem RFID-Etikett (210, 220) versehen ist; wobei die Vorrichtung zur Ortung von Objekten (21, 22, 23) Folgendes umfasst:
- eine Vielzahl von Hemmschaltkreisen (41, 42, 43, 44), die dazu bestimmt sind, jeweils in einem assoziierten Stauraum platziert zu werden, und konfiguriert sind, um, wenn eines der Objekte in dem assoziierten Stauraum verstaut wird und wenn der Hemmschaltkreis (41, 42, 43, 44) aktiviert ist, die Auslesung des RFID-Etiketts (210, 220) des Objekts durch ein RFID-Lesegerät zu hemmen, wobei die Vorrichtung (1) zur Ortung von Objekten **dadurch gekennzeichnet ist, dass** sie unter anderem Folgendes umfasst:
- eine Steuereinheit (5), konfiguriert zum Steuern der Aktivierung der Hemmschaltkreise (41, 42, 43, 44) gemäß einer vorbestimmten Aktivierungssequenz;
- eine Ortungseinheit (2), konfiguriert zum Kontrollieren des RFID-Lesegeräts (3); und zum Empfangen, bei jedem Schritt der Aktivierungssequenz, einer Liste von Identifikatoren der in der Kiste verstauten Objekte, die von dem RFID-Lesegerät (3) bereitgestellt wird, und konfiguriert zum Identifizieren des Stauraums (11, 12, 13, 14) von jedem Objekt ausgehend von den Listen von Identifikatoren und der Aktivierungssequenz.

2. Vorrichtung zur Ortung (1) von Objekten (21, 22, 23) nach Anspruch 1, wobei der Hemmschaltkreis fähig ist, durch magnetische Kopplung die Resonanzfrequenz des RFID-Etiketts zu einer zweiten Resonanzfrequenz zu transponieren, wenn er (41, 42, 43, 44) aktiviert ist.

3. Vorrichtung zur Ortung (1) nach Anspruch 2, wobei die zweite Resonanzfrequenz (f₂) zwischen 5 MHz und 10 MHz liegt.

4. Vorrichtung zur Ortung (1) nach einem der Ansprüche 1 bis 3, wobei die Aktivierungssequenz Folgendes umfasst:
- einen Initialisierungsschritt, wobei alle der Hemmer auf eine Weise deaktiviert sind, um alle in dem Kasten verstauten Objekte aufzulisten;
- eine Abfolge von Schritten, bei denen nur ein Teil der Hemmer gemäß der Aktivierungssequenz aktiviert ist.

5. Vorrichtung zur Ortung (1) nach einem der vorstehenden Ansprüche, weiter umfassend den Kasten; sodass die Stauräume (11, 12, 13, 14) auf eine Weise dimensioniert sind, dass der Koeffizient der magnetischen Kopplung zwischen
einerseits einem Hemmschaltkreis (41, 42, 43, 44) und andererseits dem RFID-Etikett (210, 220, 230) des in dem mit dem Hemmschaltkreis assoziierten Stauraum (11, 12, 13, 14) platzierten Objekts zwischen 0,5 und 1 liegt.

6. Vorrichtung zur Ortung (1) nach einem der vorstehenden Ansprüche, wobei jeder Hemmer (41, 42, 43, 44) Folgendes umfasst:
- einen Schaltkreis vom LC-Typ, der mindestens ein induktives Element (L1) umfasst, das mit einem kapazitiven Element (C1) in Reihe geschaltet ist,
- einen spannungsgesteuerten Schalter (CCT) zum Steuern der Schließung des Schaltkreises vom Typ LC.

7. Vorrichtung zur Ortung (1) nach dem vorstehenden Anspruch, wobei der spannungsgesteuerte Schalter (CCT) eine Diode vom PIN-Typ (410) umfasst, die eine erste Elektrode (E1), die mit einer ersten Spannung der Steuerung (V1) verbunden ist, und eine zweite Elektrode (E2) aufweist, wobei der Zustand der Leitfähigkeit der Diode vom PIN-Typ (410) durch einen Polarisationsschaltkreis (CL) kontrolliert wird.

8. Vorrichtung zur Ortung (1) nach dem vorstehenden Anspruch, wobei der Polarisationsschaltkreis (CL) Folgendes umfasst:
- ein Logikgatter (log1), das konfiguriert ist zum Anpassen eines numerischen Steuersignals (Vcont) an die Polarisation der Diode vom PIN-Typ (410);
- einen Widerstand (R), der mit dem Logikgatter (log1) in Reihe geschaltet ist;
- einen Tankschwingkreis (CB₁₁), der zwischen der ersten Elektrode (E1) und der Diode (410) geschaltet ist; wobei der Tankschwingkreis (CB₁₁) bei der Resonanzfrequenz des RFID-Etiketts eine erhöhte Impedanz aufweist, die der Konfiguration eines deaktivierten Hemmschaltkreises entspricht.

9. Vorrichtung zur Ortung (1) nach Anspruch 6, wobei der spannungsgesteuerte Schalter (CCT) aus einem Transistor vom CMOS-Typ ausgeführt ist.

10. Vorrichtung zur Ortung (1) nach einem der Ansprüche 6 bis 8, wobei die Hemmer auf einer Leiterplatte (PCB) ausgeführt sind,
wobei für jeden Hemmschaltkreis das induktive Element (L1) aus mindestens einer flachen Spule (B1) ausgeführt ist, die eine Vielzahl spiralförmiger metallischer Leiterbahnen umfasst, die auf mindestens einer Fläche der Leiterplatte abgeschieden sind.

11. Vorrichtung zur Ortung (1) nach dem vorstehenden Anspruch, wobei das induktive Element weiter eine zweite flache, kreisförmige Spule (B2) umfasst und wobei die erste Spule, die einen Durchmesser gleich jenem der zweiten flachen Spule aufweist, von kreisförmiger Form ist.

## Claims

1. Device for locating (1) objects (21, 22, 23) stored in a storage unit (6) comprising a plurality of storage spaces (11, 12, 13, 14, 15, 16); each object (21, 22, 23) being equipped with an RFID tag (210, 220); said object-locating device (21, 22, 23) comprising:
- a plurality of inhibitor circuits (41, 42, 43, 44) each intended to be placed in an associated storage space and configured to, when one of said objects is stored in the associated storage space and when said inhibitor circuit (41, 42, 43, 44) is activated, prevent the RFID tag (210, 220, 230) of said object from being read by an RFID reader (3), said object-locating device (1) being **characterized in that** it further comprises:
- a control unit (5) configured to control the activation of the inhibitor circuits (41, 42, 43, 44) in a predetermined activation sequence;
- a locating unit (2) configured to control the RFID reader (3); and to receive, in each step of the activation sequence, a list of identifiers of the objects stored in the storage unit, the list being supplied by the RFID reader (3), and configured to identify the storage space (11, 12, 13, 14) of each object based on the lists of identifiers and on the activation sequence.

2. Device for locating (1) objects (21, 22, 23) according to claim 1, wherein the inhibitor circuit is able to transpose the resonance frequency of the RFID tag to a second resonance frequency by magnetic coupling when it is (41, 42, 43, 44) activated.

3. Device for locating (1) according to claim 2, wherein the second resonance frequency (f₂) is between 5MHz and 10MHz.

4. Device for locating (1) according to any of claims 1 to 3, wherein the activation sequence comprises:
- an initialization step, wherein all the inhibitors are deactivated so as to list all the objects stored in the storage unit;
- a succession of steps, wherein only a portion of the inhibitors are activated according to the activation sequence.

5. Device for locating (1) according to any of the preceding claims further comprising said storage unit; such that the storage spaces (11, 12, 13, 14) are sized so that the magnetic coupling coefficient between
an inhibitor circuit (41, 42, 43, 44) on the one hand and on the other hand the RFID tag (210, 220, 230) of the object placed in the storage space (11, 12, 13, 14) associated with said inhibitor circuit, is between 0.5 and 1.

6. Device for locating (1) according to any of the preceding claims wherein each inhibitor (41, 42, 43, 44) comprises:
- an LC circuit comprising at least one inductive element (L1) mounted in series with at least one capacitve element (C1),
- a voltage-controlled switch (CCT) to control the closing of said LC circuit;

7. Device for locating (1) according to the preceding claim wherein the voltage-controlled switch (CCT) comprises a PIN diode (410) having a first electrode (E1) connected to a first control voltage (V1) and a second electrode (E2), the conductivity state of the PIN diode (410) being controlled by a biasing circuit (CL).

8. Device for locating (1) according to the preceding claim, wherein the biasing circuit (CL) comprises:
- a logic gate (log1) configured to adapt a digital control signal (Vcont) to the biasing of the PIN diode (410);
- a resistor (R) mounted in series with the logic gate (log1);
- a tank circuit (CB₁₁) mounted between the first electrode (E1) of the diode (410) and the resistor (R); the tank circuit (CB₁₁) having a high impedance at the resonance frequency of the RFID tag corresponding to the configuration of a deactivated inhibitor circuit.

9. Device for locating (1) according to claim 6, wherein the voltage-controlled switch (CCT) is carried out by a CMOS transistor.

10. Device for locating (1) according to any of claims 6 to 8, wherein the inhibitors are carried out on a printed circuit board (PCB),
for each inhibitor circuit, the inductive element (L1) is carried out by at least one planar coil (B1) comprising a plurality of spiral-shaped metal traces deposited on at least one face of said printed circuit board.

11. Device for locating (1) according to the preceding claim, wherein the inductive element further comprises a second circular planar coil (B2) and wherein the first coil is of circular shape having a diameter equal to that of the second planar coil.
